# EUROPEAN PATENT APPLICATION

(11) **EP 1 207 126 A1**
(43) Date of publication of application: **22.05.2002**
(21) Application number: 01830400.6
(22) Date of filing: 15.06.2001
(51) Int. Cl.: B65G 65/23, B65D 88/56

(54) **A turnable and tiltable support platform for handling fermentation tanks, particularly for alcoholic fermentation**

(30) Priority: 10.11.2000 IT RM000588
(71) Applicant: Tenuta di Trinoro S.r.l., 60035 Jesi (AN) (IT); Vinding-Diers, Peter Andreas, Tarcal 3915 (HU)
(72) Inventor: Franchetti, Andrea, c/o Tenuta di Trinoro S.r.l., 60035 Jesi (AN) (IT); Vinding-Diers, Peter Andreas, Tarcal 3915 (HU)
(74) Representative: Taliercio, Antonio

(57) **Abstract**

A support platform for handling fermentation tanks, particularly alcoholic fermentation tanks, characterised in that it comprises a fixed bedplate (10), preferably of stainless steel, a swingable frame (11) mounted upon said bedplate (10) and hinged on a horizontal axle (12), a turnable frame (13) that may be turned on a vertical central axis, said turnable frame being connected to said swingable frame by means of a conventional center plate (14), as well as means for swinging said swingable frame (11) and means for turning said turnable frame (13).

## Description

This invention broadly relates to fermentation tanks, for instance alcoholic fermentation tanks, and more particularly it concerns a support platform for such tanks, adapted to effect turning and tilting movements.

As it is well known, wine is obtained by alcoholic total or partial fermentation of grapes. More precisely, from a chemical view point, wine is a hydro-alcoholic solution consisting of various substances, such as water, glucose, fructose, tartaric, citric and malic acids, tannins and dyeing substances, albumins, vitamins and enzymes, as well as of various products deriving from fermentation of must and of grape-husks, such as ethyl alcohol, glycerine, esters, aldehydes, glycols, higher alcohols, as glycerol and carbon dioxide.

The micro-organism that promotes the concerned alcoholic fermentation is the so-called "yeast", a fungus pertaining to Ascomycetes that attacks the sugars contained in the must, particularly glucose and fructose, and converts them to ethyl alcohol and carbon dioxide, in addition to a number of secondary products (so defined because they are present in minor amounts), as above mentioned.

The yeast can be naturally found on the grape peels and, when the grapes are pressed it contacts the grape pulp and starts fermentation of the sugars contained therein. In this starting phase, it is necessary that a temperature higher than a minimum threshold and an amount of nitrogenous substances higher than a minimum threshold be present in order to let their reproduction and enable them to start the fermentation of must into wine.

This invention is based upon a first observation according to which the yeasts that promote the alcoholic fermentation and the various above mentioned secondary substances, in the first place glycerol, ought to be to a certain extent "inhibited" when they in some way re-absorb the substances they themselves have produced.

It has been found, in fact, that the wines of higher quality have a higher contents of such substances.

The inhibition of the yeasts prevents the re-absorption of such substances and promotes a good development of the fermentation process with resulting enrichment of the so produced wine.

This invention is based upon a second observation according to which the component of the metabolic chain which is responsible for the glycerol re-absorption ought to be hindered by the movements and by the turbulence that are caused within the fermenting mass when it is slowly and continuously handled during a portion of the paroxystic phase of the fermentation process.

Starting from the above mentioned observations, it is a object of this invention to propose a system for slowly and continuously handling the fermentation mass, in order to obtain the above described hindering effect.

This object is obtained according to this invention by means of a support platform for handling fermentation tanks comprising a fixed bedplate, preferably of stainless steel, a swingable frame mounted upon said bedplate and hinged on a horizontal axle, a turnable frame that may be turned on a vertical central axis, said turnable frame being connected to said swingable frame by means of a conventional center plate, as well as means for swinging said swingable frame and means for turning said turnable frame.

Further details and advantages of this invention will be apparent from the following specification by referring to the enclosed drawings wherein the preferred embodiment is shown by way of illustration and not by way of limitation.

In the drawings:
Figure 1 is a perspective view of an alcoholic fermentation tank that can be utilised with the handling platform according to this invention,

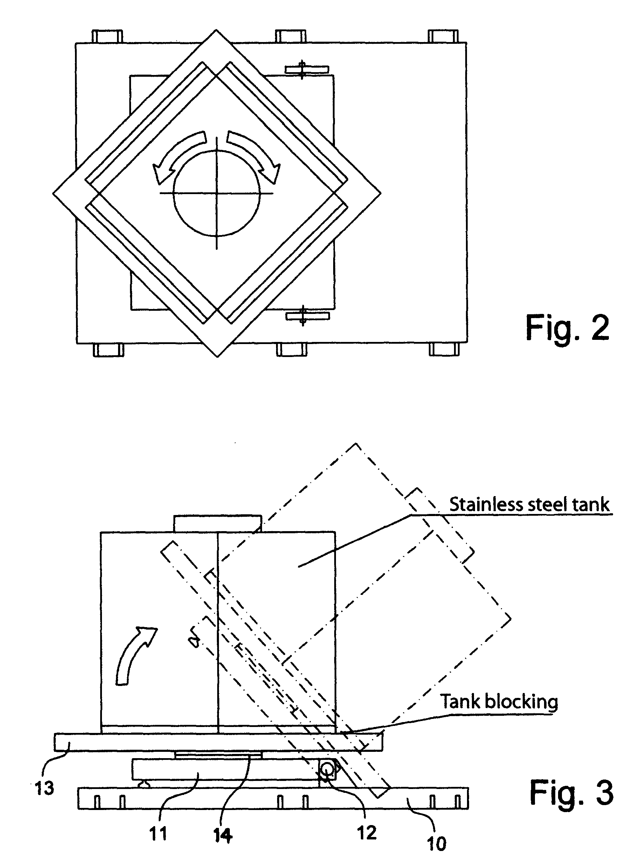

Figure 2 is an upper plan view of the platform according to this invention in which the turning movement is highlighted,
Figure 3 is a side elevation view of the platform according to this invention in which the tilting movement is highlighted.

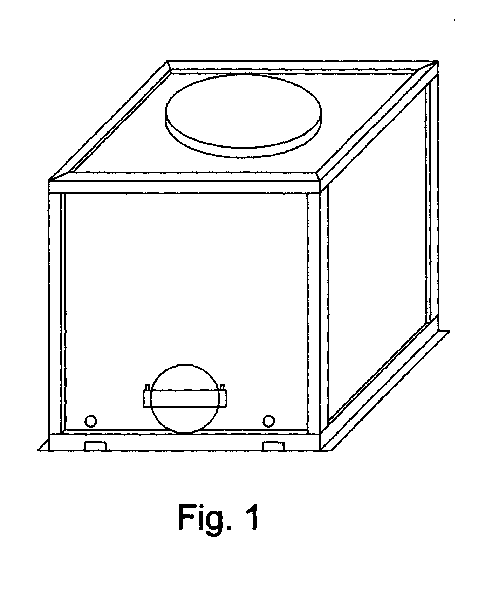

By referring now to the drawings and in the first place to Figure 1, it can be observed that, in practically exploiting this invention, it is possible to utilise a tank of parallelepiped shape, particularly of cubic shape, made of stainless steel, with conventional structure, provided with usual doors and with gas outlets at its cap cover.

It is specific subject matter of this invention to realise a platform providing for fixedly but removably mounting a tank of the above mentioned kind thereon, in order to permit to slowly and continuously handle it.

Based upon the above discussed observations, the turnable platform according to this invention comprises a fixed bedplate 10, preferably of stainless steel, a swingable frame 11 mounted upon said bedplate 10 and hinged on a horizontal axle 12, a turning frame 13 that may be turned on a vertical central axis, said turning frame being connected to said swingable frame by means of a conventional center plate 14, as well as means for swinging said swingable frame 11 and means for turning said turning frame 13.

The above mentioned means for swinging said swingable frame 11 and the above mentioned means for turning said turning frame 13 obviously can be of any kind known to those skilled in the art and can be selected according to the design and to the specific application requirements. Any necessary adjustments can be made by those skilled in the art without difficulty. By way of illustration, it can be suggested that the means for swinging said swingable frame can be preferably oleodynamic jacks and the means for turning said turnable frame can be an assembly of an electric motor and a hydraulic speed reductor and it should be anyway understood that they can be electric motors or like, with a gear driving train or with an assembly of toothed crown and chain, without departing from the scope of this invention.

From a functional view point, it should be apparent at this point that, by suitably swinging or tilting said swingable frame by 45° for instance, the tank will be tilted by the same amount and by turning said turnable frame at a suitable speed, the tank will be correspondingly turned. The combination of the two movements or anyway the combination of the turning movement with a tilted position of the fermentation tank, also taking the cubic shape of the tank, will result into a breakage of the peel "cap" formed in the tank which is turned within the tank over its corners. At the same time, it is just this slow and continuous movement that hinders and eventually blocks that component of the metabolic chain which entails the above discussed observed re-absorption effects of some secondary fermentation products and the inhibition of the yeast.

It should also be understood that, upon eliminating this inhibition effect, the fermentation process carried out by the yeast can be continued up to its natural and optimum completion, with beneficial results in the end product.

The preferred embodiments of this invention have been described and a number of variations have been suggested hereinbefore, but it should expressly be understood that those skilled in the art can make other variations and changes, without so departing from the scope of this invention as defined in the attached claims.

## Claims

1. A support platform for handling fermentation tanks, particularly alcoholic fermentation tanks, **characterised in that** it comprises a fixed bedplate (10), preferably of stainless steel, a swingable frame (11) mounted upon said bedplate (10) and hinged on a horizontal axle (12), a turnable frame (13) that may be turned on a vertical central axis, said turnable frame being connected to said swingable frame by means of a conventional center plate (14), as well as means for swinging said swingable frame (11) and means for turning said turnable frame (13).

2. An handling support platform according to claim 1, **characterised in that** said fermentation tank is shaped as a parallelepiped, in particular a cubic shape.

3. An handling support platform according to claim 1, **characterised in that** said means for swinging said swingable frame (11) are preferably oleodynamic jacks.

4. An handling support platform according to claim 1, **characterised in that** the swing of said swingable frame amounts to 45°.

5. An handling support platform according to claim 1, **characterised in that** said means for turning said turnable frame (13) are preferably an electrohydraulic motor with a gear or a toothed crown or a chain transmission.

6. A support platform for handling fermentation tanks, particularly alcoholic fermentation tanks, according to any one of the previous claims and substantially as described and shown.
